# EUROPEAN PATENT SPECIFICATION

(11) **EP 2 820 289 B1**
(45) Date of publication and mention of the grant of the patent: **25.12.2019**
(21) Application number: 13755496.0
(22) Date of filing: 25.02.2013
(51) Int. Cl.: F02M 35/024, B01D 46/00, B01D 46/24, B01D 46/48

(54) **FILTER HOUSING AND AIR FILTER UNIT FOR A COMBUSTION ENGINE**
FILTERGEHÄUSE UND LUFTFILTEREINHEIT FÜR EINE BRENNKRAFTMASCHINE
LOGEMENT DE FILTRE ET FILTRE À AIR UNITÉ POUR UN MOTEUR À COMBUSTION

(30) Priority: 01.03.2012 SE 1250192
(43) Date of publication of application: 07.01.2015
(73) Proprietor: Scania CV AB, 151 87 Södertälje (SE)
(72) Inventor: PETTERSSON, Emil, 619 30 Trosa (SE); NYBERG, Sven-Erik, S-125 72 Älvsjö (SE)
(74) Representative: Scania CV AB
(86) International application number: PCT/SE2013/050161
(87) International publication number: WO 2013/129997

(56) References cited:
- DE-A1- 10 049 313
- FR-A1- 2 255 933
- JP-A- 2005 155 452
- US-A- 5 556 440
- US-A1- 2005 284 118
- US-A1- 2008 276 583
- US-A1- 2011 259 199

## Description

### TECHNICAL FIELD

The invention relates to a filter arrangement with a housing and a filter unit, comprising an air inlet and an engine air outlet.

### BACKGROUND

In known air filter arrangements for a combustion engine of a truck the filter housing often has a releasable bottom which allows a spent filter unit to be taken out and replaced from below, i.e. from the dirty lower side of the arrangement. Although the filter change takes place from the dirty side, there is still risk that in the limited space under the vehicle the new filter unit may scrape against the dirty region in and outside the filter housing, potentially leading to dirt making its way into the filter unit and thereby to the clean side of the air system, and hence to possible damage to the engine. Such a filter change also involves a considerable amount of work and use of space, particularly as the vehicle has to be raised or placed over a greasing pit or the like in a workshop to provide space for the work involved in the change. The operation may comprise removing the bottom of the filter housing, taking out the spent filter unit, cleaning the inside and bottom of the housing, inserting the new filter unit and refitting the bottom.

DE10049313 A1 relates to filter housing which is designed, so that an air filter element can be arranged inside the housing, between a first and second carrier element. The air filter element is positionable between the two carrier elements so that by means of the first carrier element and/or of the second carrier element, a seal is realized between the untreated air chamber and the clean air chamber.

US5556440 A relates to a filter seal for a substantially cylindrical air filter which includes an integrally molded, polyurethane member which is configured with two primary portions.

### SUMMARY OF THE INVENTION

An object of the invention is to propose a filter arrangement of the kind indicated in the introduction whereby the filter unit can be changed in a simpler way, with little risk of contamination of the clean side of the filter arrangement.

This is achieved by the features indicated in the claims set out below.

The invention relates to a filter arrangement comprising a filter housing and a filter unit, wherein the filter unit comprises an air filter, and wherein the filter housing comprises:
- an air inlet and an engine air outlet,
- a top aperture for introducing and taking out the filter unit,
- a bottom aperture, and
- a cover to close the top aperture,
The filter unit comprises a closed filter bottom arranged to close the bottom aperture of the filter housing when the filter unit is being introduced into the filter housing.

In one aspect of the invention, the filter housing has a top aperture for introducing and taking out the filter unit, a bottom aperture arranged to be closed/opened by a closed bottom of the filter unit being introduced/taken out, and a cover to close the top aperture.

This arrangement thus makes it possible for the filter unit to be changed from the upper side of the filter housing, thus facilitating the work and avoiding the need to raise the vehicle or place it on a greasing bridge or over a greasing pit. The bottom aperture also makes it easier for the inside of the filter housing to be cleaned from above so that the dirt removed can make its way out via the bottom aperture. After the cleaning, the downward movement involved in introducing the new filter unit means that no contamination will be carried upwards towards the clean side of the filter housing. The fact that the bottom of the filter unit closes the bottom aperture also means that the filter housing need not have a releasable bottom.

Although other solutions are possible, in one embodiment the engine air outlet is situated in the cover. The cover may in various ways be removable and separable from the remainder of the filter housing to allow filter change, without removing the air ducts between the engine and the cover. The cover may for example be removed by being moved along or pivoted about one or more duct connections. It may also be connected to a flexible duct section such as a bellows, e.g. a narrowing bellows which can be turned inside out like a roll bellows so as to be shorter when the cover is removed far enough to allow filter change from the upper side of the filter housing.

The engine air outlet may then also be covered by a filter element. Such a filter element, which may comprise a filter cloth or a fine-mesh grille on the cover, provides protection against contamination of the clean side with the ducts to the engine when the cover is removed for filter change.

The filter unit of the arrangement comprises a substantially cylindrical air filter.

The filter unit is distinguished by a closed filter bottom arranged to close the bottom aperture of the filter housing when the filter unit is being introduced into the housing. The filter unit may have a centering means at a periphery of the filter bottom to engage with an edge of the bottom aperture, making it easy to ensure that filter change causes the filter bottom to reach a correct position.

Although the cover of the filter housing may serve as an upper seal between the dirty and clean sides of the filter unit, the filter unit in one embodiment has also a filter top having a central aperture for the engine air outlet and arranged to close the filter housing's top aperture when the filter unit is being introduced into the filter housing.

The filter top and the filter bottom of a new filter unit may thus delineate and seal the dirty side of the filter housing, i.e. the annular inlet space between the filter and the filter housing, as soon as a new filter unit is put into position in the filter housing, so that there is no risk of the clean side being contaminated when the cover is put back on.

In another embodiment an upper side of the filter top may be configured to delineate in conjunction with a cover of the filter housing an air aperture to an extra air outlet of the filter housing, which aperture extends along a periphery of the engine air outlet. This makes it possible for filtered air to pass from the filter housing to consumers other than the engine, e.g. an air compressor.

The filter unit may have centering means at a periphery of the filter top to engage with an edge of the top aperture, making it easy to ensure that filter change results in the filter top also reaching a correct position.

Other features and advantages of the invention may be indicated by the claims and the description of embodiment examples set out below.

### BRIEF DESCRIPTION OF DRAWINGS

FIG. 1 is a view obliquely from above of an air filter arrangement according to the invention;
FIG. 2 is a longitudinal sectional view corresponding to FIG. 1 with cover open;
FIG. 3 is a longitudinal sectional view approximately as per FIG. 2 with air filter partly pulled out;
FIG. 4 is a detail view, with portions cut away, of an upper portion of an air filter arrangement according to the invention;
FIG. 5 is a detail view, with portions cut away, of a lower portion of an air filter arrangement according to the invention;
FIG. 6 is a side view, with portions cut away, of an upper portion of an air filter arrangement according to the invention with cover closed;
FIG. 7 is a view corresponding to FIG. 6 with cover open; and
FIGS. 8A-8C depict schematically a process of opening the cover of an arrangement substantially according to FIGS. 6 and 7.

Throughout the drawings, the same reference numerals are used for items with same or similar functions.

### DETAILED DESCRIPTION OF EMBODIMENTS

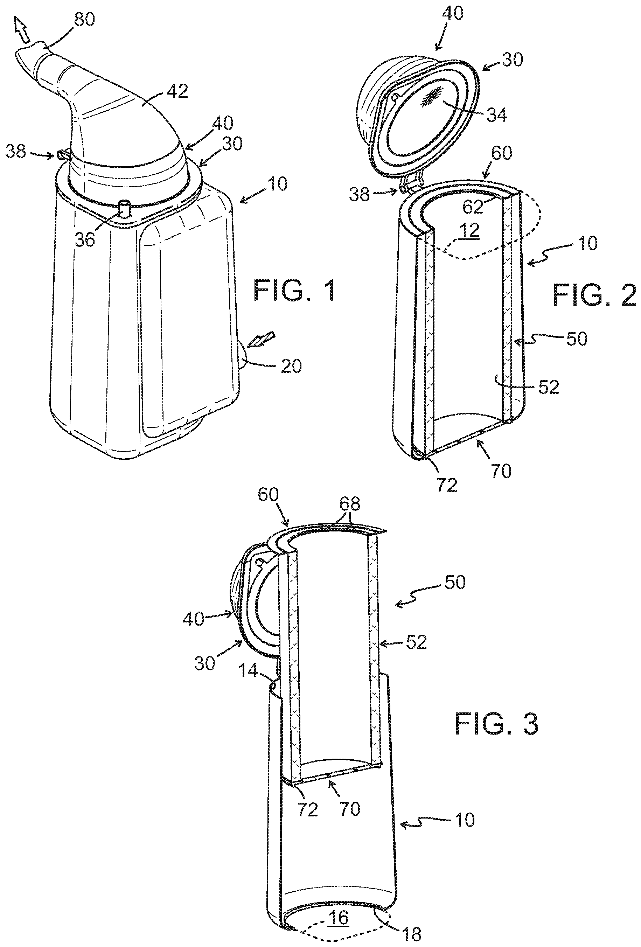

The air filter arrangement depicted in the drawings comprises in a known way an arrangement with an elongate air filter housing 10 and a filter unit or cartridge 50 comprising a substantially cylindrical air filter 52. Air which is to be filtered passes through an air inlet 20 (FIG. 1) on the outside of the filter housing 10 into an annular space between the filter unit 50 and the filter housing 10 and, after passing through the filter 52, proceeds through an engine air outlet 40 in a cover 30 on the upper side of the filter housing 10. This engine air outlet 40 is itself intended to be connected to an undepicted air intake of a combustion engine via successive air ducts 42, 80.

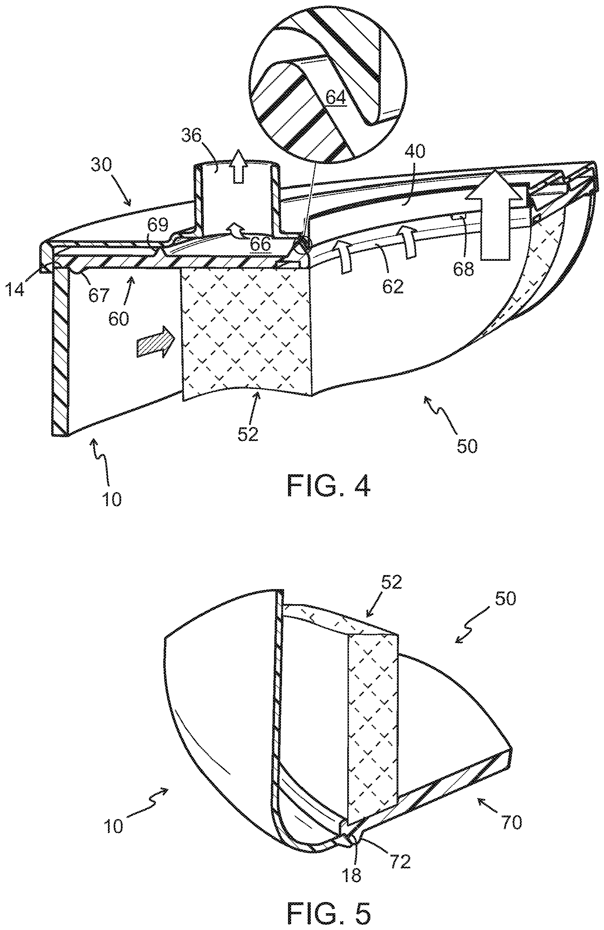

As most clearly depicted in FIG. 4, the filter 52 of the filter unit 50 is connected to a filter top in the form of an upper seal element 60 which has a central aperture 62 coaxial with an inside of the filter 52 and with the air outlet 40. When the filter unit 50 is fitted in the housing 10, the outer periphery of the seal element 60 abuts sealingly against an edge 14 which delineates a top aperture 12 of the housing. Centering means of the filter housing 10 and/or the filter top 60, e.g. an encircling protrusion 67 directed downwards from the underside of the filter top 60, may facilitate and ensure that the filter top reaches a correct position at the upper side of the housing 10.

Between the filter unit's 50 upper seal element 60 and the engine air outlet 40 there is an air aperture 64 (FIG. 4) to an extra air outlet 36. As indicated by the arrows in FIG. 4, part of the filtered air may then also be led to an encircling air duct 66 via an air aperture 64 between the cover 30 and the upper seal element 60 before making its way out through the extra air outlet 36. The air duct 66 may be delineated radially outwards by an encircling ridge 69 which is part of the upper seal element 60 and which abuts sealingly against the cover 30. In the example depicted, the extra air outlet 36, which may distribute filtered air in the arrangement to an undepicted air consumer, e.g. an air compressor, is situated in the filter housing's 10 cover 30. The air aperture 64 extends along a periphery of the engine air outlet 40, with advantage round the whole periphery, in the form of a gap which slopes obliquely outwards and upwards. The width of the gap may be maintained by supports, e.g. a plurality of evenly distributed bulges 68 which may, as desired, be situated on the upper seal element 60 (FIG. 3) or the cover 30.

As most clearly illustrated by the simplified depiction in FIG. 5, the filter unit's 50 filter 52 is also connected to a filter bottom in the form of a lower seal element 70. When the filter unit 50 is fitted in the housing 10, the outer periphery of the lower seal element 70 abuts sealingly against a lower circumferential edge 18 which delineates a bottom aperture 16 (FIG. 3) of the housing. This bottom aperture 16 allows dirt, cleaning agents and other particles to make their way out of the filter housing 10 when it is being cleaned, e.g. on the occasion of change of the filter unit 50. Centering means of the housing 10 and/or the filter bottom 70, e.g. an encircling protrusion 72 directed downwards from the underside of the filter bottom 70, may facilitate and ensure that the filter bottom 70 also reaches a correct position at the lower side of the housing 10.

Although other solutions are possible, the aforesaid cover 30 in FIGS. 1-3 and FIGS. 6-7 is depicted as being connected pivotably to the filter housing 10 via a hinge 38 situated at an upper outside of the housing 10. The cover's 30 air outlet 40 may further be covered by a filter element 34 (FIG. 2), e.g. a filter cloth and/or a fine-mesh grille,to prevent contaminants and solid particles from entering the air ducts 40, 80 when the cover 30 is open. The cover 30 may be fastened to the housing 10 by suitable connecting means, e.g. undepicted tightening screws or other kinds of fastenings.

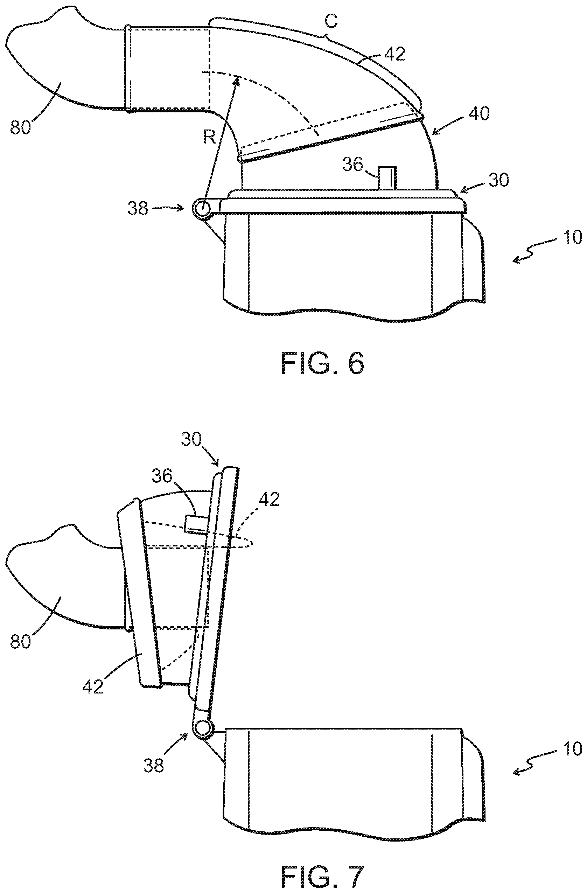

In the embodiment depicted in FIGS. 6 and 7, the air duct 40 situated nearest to the cover 30 is provided with a collapsible or flexible pipe section 42 which allows repeated opening and closing of the cover 30 without removal from or movement of the fixed air duct 80 situated nearest to the engine. In the embodiment depicted, the pipe section 42 is provided with a narrowing curved portion C made of bendable rubber elastic material which, like a roll bellows, allows the larger cross-section nearest to the cover 30 to be turned inside out, with or without help from a service technician, over the narrowing cross-section nearest to the air duct 80, approximately as depicted in FIG. 7, when the cover 30 is being opened. In a functional state, the pipe section 42 is stretched over the engine air outlet 40 and the air duct 80. A middle line of the curved portion may then extend at approximately constant distance R from the cover's hinge 38.

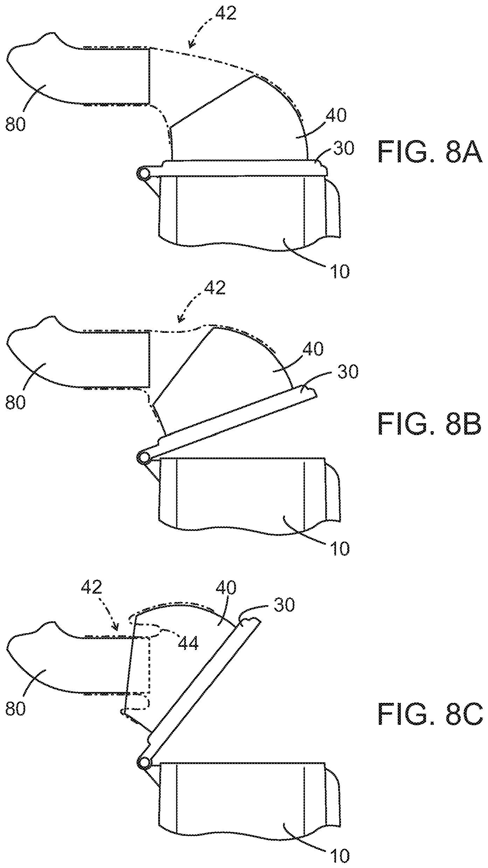

FIGS. 8A-8C depict in more detail an opening process of an arrangement substantially corresponding to that in FIGS. 6 and 7. The air ducts 40 and 80 extend relatively far into the flexible pipe section 42 in order to support it and prevent its collapsing during operation. As indicated in FIG. 8B, the cross-section of the pipe section 42 between the ducts may in various ways, e.g. by material notches or built-in stresses, be arranged to be drawn together somewhat or deformed radially inwards when the cover 30 starts opening. The larger duct 40 connected to the cover 30 will then be situated round and spaced from the narrower duct 80. When thereafter the cover in FIG. 8C approaches the open state which allows an undepicted filter unit to be taken out of the filter housing 10, a roll lobe 44 may naturally form on the portion of the pipe section 42 which is supported on an end portion of the narrower duct 80 so that the pipe section 42 unrolls like a roll bellows on this end portion.

In this and other embodiments, the cover 30 need not necessarily be connected pivotably to the remainder of the housing 10, as it may also in an undepicted way be capable of being completely lifted away from the housing 10.

The detailed description set out above is primarily intended to facilitate understanding and no unnecessary limitations of the invention are to be construed therefrom. The modifications which will be obvious to one skilled in the art from perusing the description may be effected without departing from the concept of the invention or the scope of the claims set out below.

### ABSTRACT

The invention relates to an arrangement with a filter housing (10) and a filter unit (50) with a substantially semicylindrical air filter (52), comprising an air inlet (20) and an engine air outlet (40). According to the invention the filter housing (10) has a top aperture (12) for introducing and taking out the filter unit (50), a bottom aperture (16) arranged to be closed and opened by a closed filter bottom (70) of the filter unit (50) being introduced or taken out, and a cover (30) to close the top aperture (12).

## Claims

1. A filter arrangement comprising a filter housing (10) and a filter unit (50), wherein the filter unit (50) comprises a substantially cylindrical air filter (52), and wherein the filter housing (10) comprises:
- an air inlet (20) and an engine air outlet (40),
- a top aperture (12) for introducing and taking out the filter unit (50),
- a bottom aperture (16), and
- a cover (30) to close the top aperture (12),
**characterized in that** the filter unit (50) comprises a closed filter bottom (70) arranged to close the bottom aperture (16) of the filter housing (10) when the filter unit (50) is being introduced into the filter housing (10).

2. A filter arrangement according to claim 1, such that the engine air outlet (40) is situated in the cover (30).

3. A filter arrangement according to claim 1 or 2, such that the engine air outlet (40) is covered by a filter element (34).

4. A filter arrangement according to any one of the preceding claims, wherein the filter unit (50) comprises centering means (72) at a periphery of the filter bottom (70) for engagement with an edge (18) of the bottom aperture (16).

5. A filter arrangement according to any one of the preceding claims, wherein the filter unit (50) comprises a filter top (60) with a central aperture (62) for the engine air outlet (40) and arranged to close the top aperture (12) of the filter housing (10) when the filter unit (50) is being introduced into the filter housing (10).

6. A filter arrangement according to claim 5, such that an upper side of the filter top (60) is configured to delineate in conjunction with the cover (30) an air aperture (64) to an extra air outlet (36) of the filter housing (10), which aperture (64) extends along a periphery of the engine air outlet (40).

7. A filter arrangement according to claim 5 or 6, wherein the filter unit (50) comprises centering means (67) at a periphery of the filter top (60) for engagement with an edge (14) of the top aperture (12).

## Patentansprüche

1. Filteranordnung mit einem Filtergehäuse (10) und einer Filtereinheit (50), wobei die Filtereinheit (50) einen im Wesentlichen zylindrischen Luftfilter (52) aufweist und wobei das Filtergehäuse (10) aufweist:
- einen Lufteinlass (20) und einen Motorluftauslass (40),
- eine obere Öffnung (12) zum Einsetzen und Herausnehmen der Filtereinheit (50),
- eine untere Öffnung (16), und
- einen Deckel (30) zum Verschließen der oberen Öffnung (12),
**dadurch gekennzeichnet, dass** die Filtereinheit (50) einen verschlossenen Filterboden (70) aufweist, der dazu angeordnet ist, die untere Öffnung (16) des Filtergehäuses (10) zu verschließen, wenn die Filtereinheit (50) in das Filtergehäuse (10) eingesetzt wird.

2. Filteranordnung nach Anspruch 1, derart, dass der Motorluftauslass (40) sich in dem Deckel (30) befindet.

3. Filteranordnung nach Anspruch 1 oder 2, derart, dass der Motorluftauslass (40) durch ein Filterelement (34) abgedeckt ist.

4. Filteranordnung nach einem der vorhergehenden Ansprüche, wobei die Filtereinheit (50) Zentriermittel (72) an einem Umfang des Filterbodens (70) zum Eingriff mit einem Rand (18) der unteren Öffnung (16) aufweist.

5. Filteranordnung nach einem der vorhergehenden Ansprüche, wobei die Filtereinheit (50) einen Filterkopf (60) mit einer zentralen Öffnung (62) für den Motorluftauslass (40) aufweist, der dazu angeordnet ist, die obere Öffnung (12) des Filtergehäuses (10) zu verschließen, wenn die Filtereinheit (50) in das Filtergehäuse (10) eingesetzt wird.

6. Filteranordnung nach Anspruch 5, derart, dass eine Oberseite des Filterkopfes (60) dazu eingerichtet ist, zusammen mit dem Deckel (30) eine Luftöffnung (64) zu einem zusätzlichen Luftauslass (36) des Filtergehäuses (10) zu begrenzen, wobei die Öffnung (64) längs eines Umfangs des Motorluftauslasses (40) verläuft.

7. Filteranordnung nach Anspruch 5 oder 6, wobei die Filtereinheit (50) Zentriermittel (67) an einem Umfang des Filterkopfes (60) zum Eingriff mit einem Rand (14) der oberen Öffnung (12) aufweist.

## Revendications

1. Agencement de filtre comprenant un logement de filtre (10) et une unité de filtre (50), dans lequel l'unité de filtre (50) comprend un filtre d'air substantiellement cylindrique (52), et dans lequel le logement de filtre (10) comprend :
- une entrée d'air (20) et une sortie d'air du moteur (40),
- une ouverture supérieure (12) destinée à l'introduction et au retrait de l'unité de filtre (50),
- une ouverture inférieure (16), et
- un couvercle (30) destiné à la fermeture de l'ouverture supérieure (12),
**caractérisé en ce que** l'unité de filtre (50) comprend un fond du filtre fermé (70) agencé pour fermer l'ouverture inférieure (16) du logement de filtre (10) lorsque l'unité de filtre (50) est introduite dans le logement de filtre (10).

2. Agencement de filtre selon la revendication 1, disposé de sorte que la sortie d'air du moteur (40) se trouve dans le couvercle (30) .

3. Agencement de filtre selon la revendication 1 ou 2, disposé de sorte que la sortie d'air du moteur (40) est couverte par un élément filtrant (34).

4. Agencement de filtre selon l'une quelconque des revendications précédentes, dans lequel l'unité de filtre (50) comprend des moyens de centrage (72) à une périphérie du fond du filtre (70) pour l'engagement avec un bord (18) de l'ouverture inférieure (16).

5. Agencement de filtre selon l'une quelconque des revendications précédentes, dans lequel l'unité de filtre (50) comprend une partie supérieur du filtre (60) avec une ouverture centrale (62) destiné à la sortie d'air du moteur (40) et disposée pour fermer l'ouverture supérieure (12) du logement de filtre (10) lorsque l'unité de filtre (50) est introduit dans le logement de filtre (10).

6. Agencement de filtre selon la revendication 5, disposé de sorte qu'une côté supérieur de la partie supérieure du filtre (60) est configurée pour délimiter conjointement avec le couvercle (30) une ouverture d'air (64) à une sortie d'air supplémentaire (36) du logement de filtre (10), laquelle l'ouverture (64) s'étend le long d'une périphérie de la sortie d'air du moteur (40).

7. Agencement de filtre selon la revendication 5 ou 6, dans lequel le filtre (50) comprend des moyens de centrage (67) à une périphérie de la partie supérieure du filtre (60) pour l'engagement avec un bord (14) de l'ouverture supérieure (12).
